# EUROPÄISCHE PATENTSCHRIFT

(11) **EP 3 282 233 B1**
(45) Veröffentlichungstag und Bekanntmachung des Hinweises auf die Patenterteilung: **26.10.2022**
(21) Anmeldenummer: 17182077.2
(22) Anmeldetag: 19.07.2017
(51) Int. Cl.: G01F 25/10, G01F 25/20, G06F 11/00, G01F 23/284, G01F 1/00

(54) **VERFAHREN ZUM BETREIBEN EINES FÜLLSTANDMESSGERÄTS UND FÜLLSTANDMESSGERÄT**
METHOD FOR OPERATING A FILLING LEVEL MEASUREMENT DEVICE AND FILLING LEVEL MEASUREMENT DEVICE
PROCÉDÉ DE FONCTIONNEMENT D'UN APPAREIL DE MESURE DE NIVEAU DE REMPLISSAGE ET APPAREIL DE MESURE DE NIVEAU DE REMPLISSAGE

(30) Priorität: 08.08.2016 DE 102016114647
(43) Veröffentlichungstag der Anmeldung: 14.02.2018
(73) Patentinhaber: Krohne Messtechnik GmbH, 47058 Duisburg (DE)
(72) Erfinder: DEILMANN, Michael, 45257 Essen (DE); GERDING, Michael, 44805 Bochum (DE)
(74) Vertreter: Gesthuysen Patentanwälte

(56) Entgegenhaltungen:
- EP-A1- 0 416 163
- EP-A1- 1 398 605
- WO-A1-2015/039814
- WO-A2-2010/141458
- WO-A2-2011/076478
- WO-A2-2014/105031
- DE-A1- 10 249 544
- DE-A1-102010 063 984
- DE-A1-102011 075 238
- DE-A1-102014 222 923
- DE-B3-102013 019 524
- US-A- 3 818 232
- US-A1- 2013 207 677
- US-A1- 2014 174 172
- US-A1- 2015 009 063

## Beschreibung

Die Erfindung geht aus von einem Verfahren zum Betreiben eines Füllstandmessgeräts, wobei das Füllstandmessgerät wenigstens einen Messwertaufnehmer zur Aufnahme und zur Weiterleitung von Messwerten einer primären Messgröße aufweist. Darüber hinaus geht die Erfindung aus von einem Füllstandmessgerät mit wenigstens einem Messwertaufnehmer zur Aufnahme und zur Weiterleitung von Messwerten einer primären Messgröße.

In vielen Bereichen der Prozessmesstechnik wird die Messung von prozessbedingten Störungen überlagert. Wirkt sich eine solche Störung auf die Messgröße aus, so sind die bestimmten Messwerte fehlerhaft in Bezug auf den wahren Wert der Messgröße. Im Ergebnis verringert sich die Zuverlässigkeit sowie die Messgenauigkeit des Messgeräts.

Die vorliegende Erfindung betrifft den Betrieb von Füllstandmessgeräten .

Ein Messprinzip zur Bestimmung des Füllstandes eines Mediums in einem Behälter ist das Laufzeitverfahren. Dabei wird entweder geführt oder freistrahlend ein elektromagnetisches Signal in Richtung des Mediums ausgesendet und durch Auswertung der Laufzeit des an der Mediumoberfläche reflektierten Signals der Füllstand des Mediums in dem Behälter bestimmt. Bei der Befüllung des Behälters kann nun die Situation auftreten, dass das einzufüllende Medium das elektromagnetische Signal kreuzt, wodurch ein fehlerhafter, da zu hoher Füllstand bestimmt wird. Zudem sind häufig Rührwerke zur Durchmischung des Mediums innerhalb des Behälters angeordnet, welche ebenfalls den Signalstrahl durchkreuzen und dadurch die Messwertaufnahme stören und/oder verfälschen können

Im Bereich der Durchflussmesstechnik können leere oder teilgefüllte Rohrleitungen zu fehlerhaften Messwerten führen. Aus der Druckschrift DE 10 2014 015 943 B3 ist ein Verfahren zum Betreiben eines kernmagnetischen Durchflussmessgeräts, insbesondere zur Bestimmung des Durchflusses eines Mediums mit Schwallströmung bekannt. Eine Schwallströmung ist gekennzeichnet durch einen ersten Bereich bestehend aus einem Schwall an flüssigem Medium und einen zweiten Bereich bestehend aus einer großen Gasblase, die einen dominierenden Teil des Messrohrquerschnitts einnimmt und einem Flüssigkeitsfilm, der den verbleibenden Teil des Messrohrquerschnitts ausfüllt. Um die verschiedenen Phasen des Mediums voneinander zu unterscheiden, wird das Durchflussmessgerät für die jeweiligen Phasen neu kalibriert.

Weiterhin sind im Bereich der Abstands- und Dickenmessung konfokale Sensoren bekannt, bei denen die Messwertaufnahme und -ausgabe durch ein externes elektrisches Triggersignal oder per Kommando steuerbar ist (microepsilon, Betriebsanleitung confocalDT 2451/2461/2471, Seite 57 ff.). Maßgeblich für den Start der Messwertausgabe bzw. -aufnahme ist das Vorliegen einer zuvor festgelegten Signalhöhe oder Signalform am Triggereingang oder ein entsprechender Softwarebefehl. Unterschieden wird weiterhin zwischen der Triggerung der Messwertaufnahme, bei der die Messwertberechnung erst nach einer erfüllten Triggerbedingung erfolgt, und der Triggerung der Messwertausgabe, wobei die Berechnung der Messwerte laufend und unabhängig erfolgt und wobei eine erfüllte Triggerbedingung die Ausgabe der Messwerte auslöst.

Aus dem Dokument WO 2014/105031 A1 ist es bekannt, den Zustand einer Störung eines Messgeräts basierend auf der Differenz zwischen zwei aufeinanderfolgender Messwerte festzustellen.

Das Dokument DE 10 2013 019 524 B3 offenbart, ein Fehlersignal zu generieren, wenn die Neigung der Sendeeinrichtung eines Füllstandmessgerätes einen vorgegebenen Toleranzbereich überschreitet.

Aus dem Dokument EP 1 398 605 A1 ist ein Füllstandmessgerät mit einer zusätzlichen Füllstandbestimmungseinrichtung bekannt, wobei zwei in unterschiedlicher Weise ermittelte Füllstandmesswerte zur Prüfung der Verlässlichkeit des nach dem Radarprinzip ermittelten Füllstands miteinander verglichen werden. Wird ein vorgegebener Toleranzbereich einer Messabweichung überschritten, wird eine Fehlermeldung ausgegeben.

Zudem offenbart das Dokument WO 2011/076478 A2 ein Verfahren zur Bestimmung des relevanten Nutzsignals zur Füllstandbestimmung aus der Gesamtheit sämtlicher Echosignale, die auf verschiedene Störer, unter anderem auf das Vorhandensein eines Einfüllstrahls zurückzuführen sind. Im Detail werden in einer Einlernphase Vergleichssignale ermittelt, durch die während des Betriebs das relevante Nutzecho aus dem Gesamtecho herausgefiltert wird.

Ausgehend von dem zuvor dargelegten Stand der Technik ist es Aufgabe der vorliegenden Erfindung, ein Verfahren zum Betreiben eines Füllstandmessgeräts anzugeben, welches eine besonders hohe Zuverlässigkeit und Messgenauigkeit gewährleistet. Darüber hinaus liegt der Erfindung die Aufgabe zugrunde, ein Füllstandmessgerät mit einer besonders hohen Messgenauigkeit anzugeben.

Gemäß einer ersten Lehre der vorliegenden Erfindung wird die zuvor genannte Aufgabe durch ein eingangs genanntes Verfahren entsprechend dem Anspruch 1 dadurch gelöst, dass die Messwertaufnahme und/oder die Messwertweiterleitung in Abhängigkeit von dem Betriebszustand des Füllstandmessgeräts erfolgt, wobei die Messwertaufnahme oder die Messwertweiterleitung während einer Störung unterbrochen wird. Grundsätzlich lassen sich die Betriebszustände eines Füllstandmessgeräts in die folgenden drei Kategorien einteilen: Betrieb, Störung und Stillstand. Eine Störung zeichnet sich erfindungsgemäß dadurch aus, dass der Messwert von dem wahren Wert der Messgröße abweicht, wobei die Abweichung größer ist als die übliche Messunsicherheit und wobei die Abweichung insbesondere auf prozessbedingte Störungen zurückzuführen ist.

Eine solche Störung wird durch den Befüllvorgang eines Behälters im Rahmen einer Füllstandmessung verursacht. Kreuzt der Einfüllstrahl den Signalstrahl zur Messung der Füllstandhöhe, so wird ein fehlerhafter Füllstand bestimmt. Eine regelmäßig wiederkehrende Störung während einer Füllstandmessung ist auf das Vorhandensein eines Rührwerks in einem Behälter zurückzuführen. Auch das Rührwerkspaddel kann den Signalstrahl passieren und so den Messwert der Füllstandhöhe beeinflussen.

Erfindungsgemäß wurde erkannt, dass die Messwertaufnahme und/oder die Messwertweiterleitung mit dem Betriebszustand des Füllstandmessgeräts synchronisiert werden kann. Dabei erfolgt eine Messwertaufnahme oder eine Messwertweiterleitung nur dann, wenn keine Störung vorliegt. Dadurch können Fehlmessungen bereits im Vorhinein vermieden werden oder sofern die Messwertaufnahme auch bei Störungen stattfindet, kann die Weiterleitung von fehlerhaften Messwerten vermieden werden. Auf jeden Fall wird erfindungsgemäß vermieden, dass Fehlmessungen ausgegeben und in weiterführenden Auswertungen, insbesondere in statistischen Analysen, berücksichtigt werden. Insofern weist ein mit einem erfindungsgemäßen Verfahren betriebenes Füllstandmessgerät eine besonders hohe Zuverlässigkeit der Messwerte und eine verbesserte Messgenauigkeit auf.

Bei dem Vorliegen einer Störung ist grundsätzlich zu unterscheiden zwischen periodisch auftretenden Störungen, verursacht durch das Vorhandensein eines Rührwerks im Behälter während der Füllstandbestimmung, wobei die Rührwerkspaddel in regelmäßigen Zeitabständen den Signalstrahl kreuzen, und einmalig oder unregelmäßig auftretenden Störungen, wie beispielsweise verursacht durch das Vorhandensein von Gasblasen im Medium während der Durchflussmessung.

Gemäß einer ersten Ausgestaltung des erfindungsgemäßen Verfahrens erfolgt die Aufnahme der Messwerte kontinuierlich oder periodisch. Vorzugsweise betrifft das erfindungsgemäße Verfahren damit Messgeräte, welche zur dauerhaften Überwachung wenigstens einer Messgröße eingesetzt werden. Diese Ausgestaltung des Verfahrens ermöglicht es daher eine fortlaufende Messung temporär oder ereignisgesteuert zu unterbrechen, um Fehlmessungen zu vermeiden.

Erfindungsgemäß weist der Messwertaufnehmer einen Trigger auf, wobei der Trigger im Fall wenigstens einer erfüllten Triggerbedingung die Messwertaufnahme oder die Messwertweiterleitung unterbricht, wobei die wenigstens eine Triggerbedingung bei dem Vorliegen einer Störung erfüllt ist. Die Triggerbedingung kann abhängig oder unabhängig vom aktuellen Messwert der primären Messgröße sein.

Ist die Triggerbedingung abhängig von dem aktuellen Messwert, so erfolgt zunächst die Messwertaufnahme, dann die Auswertung der Triggerbedingung durch den Trigger. Anschließend wird die Messwertweiterleitung unterbrochen, wenn die Triggerbedingung erfüllt ist oder der Messwert wird weitergeleitet, wenn die Triggerbedingung nicht erfüllt ist. Dabei kann die Auswertung der Triggerbedingung nach der Messwertaufnahme jedes einzelnen Messwerts erfolgen oder alternativ nach der Messwertaufnahme einer Vielzahl von Messwerten, beispielsweise nach der Aufnahme von 10 oder 100 oder 500 Messwerten. Vorzugsweise werden die vor der Auswertung der Triggerbedingung aufgenommenen Messwerte in einem Zwischenspeicher abgelegt, bevor die Messwerte weitergeleitet werden.

Ist die Triggerbedingung dagegen unabhängig von dem aktuellen Messwert, so kann die Triggerbedingung vor der Messwertaufnahme ausgewertet werden und der Trigger kann die Messwertaufnahme unterbrechen, wenn die Triggerbedingung erfüllt ist. Alternativ kann die Triggerbedingung zeitgleich oder zeitlich nach der Messwertaufnahme ausgewertet werden, wobei dann der Trigger die Messwertweiterleitung unterbricht, wenn die Triggerbedingung erfüllt ist.

Der Trigger weist vorzugsweise einen physikalischen Triggereingang auf, wobei eine Triggerbedingung genau dann erfüllt ist, wenn dem Trigger ein externes Triggersignal über den Triggereingang zugeführt wird. Besonders bevorzugt ist das Füllstandmessgerät im Betrieb mit einem weiteren Gerät, welches eine Störung verursacht über den Triggereingang verbunden. Das die Störung verursachende Gerät kann dann beispielsweise ein Signal an den Triggereingang senden, wenn ein die Messung beeinflussender Prozess abläuft, d. h. wenn eine Störung vorliegt. In diesem Fall ist die Triggerbedingung unabhängig von dem Messwert. Daher wird gemäß einer vorteilhaften Ausgestaltung die Triggerbedingung ausgewertet bevor die Messwertaufnahme erfolgt. Ist die Triggerbedingung erfüllt, so wird die Messwertaufnahme unterbrochen, solange die Triggerbedingung erfüllt ist.

Alternativ oder zusätzlich, wenn das weitere Gerät regelmäßig wiederkehrende Störungen verursacht, kann das die Störungen verursachende Gerät die Frequenz der Störung an den Trigger übermitteln. Das Füllstandmessgerät wird dann vorzugsweise derart mit dem Triggersignal synchronisiert, dass im Fall von periodischen Störungen die Messwertaufnahme nur dann erfolgt, wenn gerade keine Störung vorliegt.

Besonders bevorzugt ist das externe Triggersignal innerhalb einer Nachricht gemäß eines Datenprotokolls ausgestaltet. Bei dieser Ausgestaltung ist das Füllstandmessgerät mit dem weiteren Gerät über eine Schnittstelle verbunden, die eine Kommunikation auf Grundlage des Datenprotokolls ermöglicht, wobei die das Triggersignal enthaltene Nachricht über die Schnittstelle an das Füllstandmessgerät bzw. an den Messwertaufnehmer übertragen wird. Bei der Schnittstelle kann es sich beispielsweise um eine Feldbusschnittstelle (CAN, HART) handeln oder auch um eine Schnittstelle gemäß dem Ethernet-Standard.

In vorteilhafter Weise kann mit einem der zuvor beschriebenen Verfahren die Aufnahme von einzelnen Messwerten getriggert werden, wodurch das mit dem Verfahren betriebene Füllstandmessgerät eine besonders hohe Messgenauigkeit gewährleistet.

Gemäß einer weiteren Ausgestaltung ist in dem Trigger wenigstens ein oberer und/oder ein unterer Grenzwert hinterlegt, wobei eine Triggerbedingung eine Vergleichsoperation mit dem oberen und/oder dem unteren Grenzwert umfasst. Ist beispielsweise der obere Grenzwert überschritten oder der untere Grenzwert unterschritten, so ist die Triggerbedingung erfüllt und die Messwertaufnahme oder die Messwertweiterleitung wird unterbrochen.

Vorzugsweise ist der obere Grenzwert die maximale Messwertdifferenz zweier aufeinanderfolgender Messwerte der primären Messgröße. Erwartungsgemäß passieren in der Prozessmesstechnik keine sprunghaften Änderungen von Messgrößen, sodass zumindest ein oberer Grenzwert für die Differenz zweier aufeinanderfolgender Messwerte, im Rahmen der vorliegenden Erfindung auch als Messwertdifferenz bezeichnet, festgelegt werden kann. Dieser obere Grenzwert kann ebenfalls statistisch bestimmt werden.

Gemäß dieser Ausgestaltung des erfindungsgemäßen Verfahrens bestimmt der Messwertaufnehmer zunächst wenigstens zwei Messwerte, die der Messwertaufnehmer an den Trigger übergibt. Der Trigger bildet die Differenz jeweils zweier aufeinanderfolgender Messwerte und vergleicht die so bestimmte aktuelle Messwertdifferenz oder die so bestimmten aktuellen Messwertdifferenzen mit dem hinterlegten Grenzwert der Messwertdifferenz. Ist wenigstens eine aktuelle Messwertdifferenz größer als der Grenzwert, so ist die Triggerbedingung erfüllt und der Trigger unterbricht die Messwertweiterleitung. Gemäß dieser Ausgestaltung des erfindungsgemäßen Verfahrens liegt damit eine Störung bei einer sprunghaften Änderung der primären Messgrö-ße vor.

Vorteilhaft ist es ebenfalls, wenn alternativ oder zusätzlich wenigstens eine elektrische Kenngröße bestimmt wird und wenn ein Grenzwert die maximale Änderung der elektrischen Kenngröße ist. Eine elektrische Kenngröße ist eine für einen Messvorgang charakteristische Größe, die sich im Verlauf des Messvorgangs nicht oder nur geringfügig ändert. Eine solche Kenngröße kann beispielsweise das Grundrauschen oder die Amplitude der Messwerte sein. Gemäß dieser Ausgestaltung des Verfahrens ist vorzugsweise ein Ausgangswert der elektrischen Kenngröße in dem Trigger hinterlegt, wobei der Ausgangswert dem Wert der elektrischen Kenngröße beim Start der Messung entspricht.

Die Bestimmung der elektrischen Kenngröße erfolgt vorzugsweise durch den Messwertaufnehmer. Dazu werden zunächst ein oder mehrere Messwerte bestimmt, aus dem oder aus denen der aktuelle Wert der elektrischen Kenngrö-ße bestimmt wird. Alternativ kann die Bestimmung durch einen externen Sensor erfolgen, der den Wert der elektrischen Kenngröße an das Füllstandmessgerät bzw. an den Trigger überträgt. Der Trigger bestimmt die Abweichung zwischen dem aktuellen Wert der elektrischen Kenngröße und dem hinterlegten Ausgangswert und vergleicht diese mit dem Grenzwert. Ist die Abweichung höher als der Grenzwert der Abweichung, so ist die Triggerbedingung erfüllt und der Trigger unterbricht die Messwertweiterleitung.

Gemäß einer weiteren Ausgestaltung wird wenigstens eine sekundäre Messgröße bestimmt, wobei ein Grenzwert die maximale Änderung der sekundären Messgröße ist. Die Bestimmung der sekundären Messgröße kann entweder durch den Messwertaufnehmer oder einen externen Sensor erfolgen, der den Wert der sekundären Messgröße an den Trigger übergibt. Eine sekundäre Messgröße ist beispielsweise die Temperatur oder der Druck in dem das Medium beinhaltenden Behälter oder in der von dem Medium durchflossenen Rohrleitung. Beide Betriebsparameter ändern sich erwartungsgemäß während einer Messung nicht oder nur unwesentlich, damit die primäre Messgrö-ße zuverlässig bestimmt werden kann. Vorzugsweise ist ein Ausgangswert der sekundären Messgröße in dem Trigger hinterlegt, wobei der Ausgangswert dem Wert der sekundären Messgröße beim Start der Messung entspricht.

Der Trigger bestimmt gemäß dieser Ausgestaltung des Verfahrens die Abweichung zwischen dem aktuellen Messwert der sekundären Messgröße und dem Ausgangwert. Ist die Differenz höher als festgelegte obere Grenzwert, so ist die Triggerbedingung erfüllt und der Trigger unterbricht die Messwertweiterleitung. Eine insbesondere sprunghafte Änderung der sekundären Messgröße entspricht gemäß dieser Ausgestaltung einer Störung des Messgeräts.

Gemäß einer weiteren Ausgestaltung weist der Trigger einen physikalischen Triggereingang auf, wobei eine erste Triggerbedingung genau dann erfüllt ist, wenn dem Trigger ein externes Triggersignal über den Triggereingang zugeführt wird. Zusätzlich unterbricht der Trigger ebenfalls die Messwertaufnahme und/oder die Messwertweiterleitung, wenn alternativ oder zusätzlich eine zweite Triggerbedingung erfüllt ist, wobei in dem Trigger wenigstens ein Grenzwert hinterlegt ist und die zweite Triggerbedingung eine Vergleichsoperation mit dem Grenzwert umfasst.

Weiterhin kann der Messwertaufnehmer eine Zeiteinheit zur Erfassung der Echtzeit, insbesondere eine Echtzeituhr, aufweisen, wobei die Zeiteinheit dem Zustand einer Störung einen Zeitpunkt zuordnet und wobei die Zeiteinheit im Fall von periodisch auftretenden Störungen die Periode dieser Störungen bestimmt und wobei die Messwertaufnahme oder die Messwertweiterleitung mit dieser Periode synchronisiert wird.

Besonders bevorzugt erfolgt die Beurteilung, ob eine Störung vorliegt, gemäß einem der zuvor beschriebenen Verfahren durch den Trigger des Messwertaufnehmers. Es wird insbesondere jeweils der Zeitpunkt erfasst, zu dem die Messwertaufnahme und/oder die Messwertweiterleitung unterbrochen wird. Mit zunehmender Betriebsdauer des Messgeräts nimmt damit die Möglichkeit zu, regelmäßig wiederkehrende Störungen durch die Zeiteinheit als solche zu identifizieren und entsprechend bei der Messwertaufnahme oder der Messwertweiterleitung zu berücksichtigen.

Unter der Berücksichtigung der wiederkehrenden Störung wird vorliegend verstanden, dass der Messwertaufnehmer, sobald die Zeiteinheit eine periodische Störung erkannt hat, automatisch synchron mit der Periode der Störung die Messwertaufnahme oder die Messwertweiterleitung unterbricht.

Ein gemäß diesem Verfahren betriebenes Füllstandmessgerät ist damit in der Lage, selbstständig Störungen zu erfassen und diese wie beschrieben automatisch zu berücksichtigen.

Gemäß einer zweiten Lehre wird die eingangs genannte Aufgabe durch ein Füllstandmessgerät gemäß Anspruch 10 dadurch gelöst, dass der Messwertaufnehmer derart ausgestaltet ist, dass die Messwertaufnahme und/oder die Messwertweiterleitung in Abhängigkeit von dem Betriebszustand des Füllstandmessgeräts erfolgt, wobei die Messwertaufnahme oder die Messwertweiterleitung während einer Störung unterbrochen ist. In vorteilhafter Weise wird damit ein Füllstandmessgerät bereitgestellt, welches Störungen, die sich auf die Messgröße und insofern auf die Zuverlässigkeit und die Genauigkeit des Messgeräts auswirken, schon bei der Bereitstellung von Messwerten berücksichtigt.

Gemäß einer vorteilhaften Ausgestaltung des Füllstandmessgeräts weist das Füllstandmessgerät eine Zeiteinheit und/oder einen Trigger mit einem physikalischen Triggereingang auf.

Besonders bevorzugt ist das Füllstandmessgerät derart ausgestaltet, dass das Füllstandmessgerät im Betrieb eines der zuvor beschriebenen Verfahren durchführt. Im Einzelnen gibt es nun eine Vielzahl von Möglichkeiten, das erfindungsgemäße Verfahren und das Füllstandmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines erfindungsgemäßen Verfahrens,
- Fig. 2: ein zweites Ausführungsbeispiel eines erfindungsgemäßen Verfahrens,
- Fig. 3: ein erstes Ausführungsbeispiel eines erfindungsgemäßen Füllstandmessgeräts im Betrieb und
- Fig. 4: ein zweites Ausführungsbeispiel eines erfindungsgemäßen Füllstandmessgeräts im Betrieb.

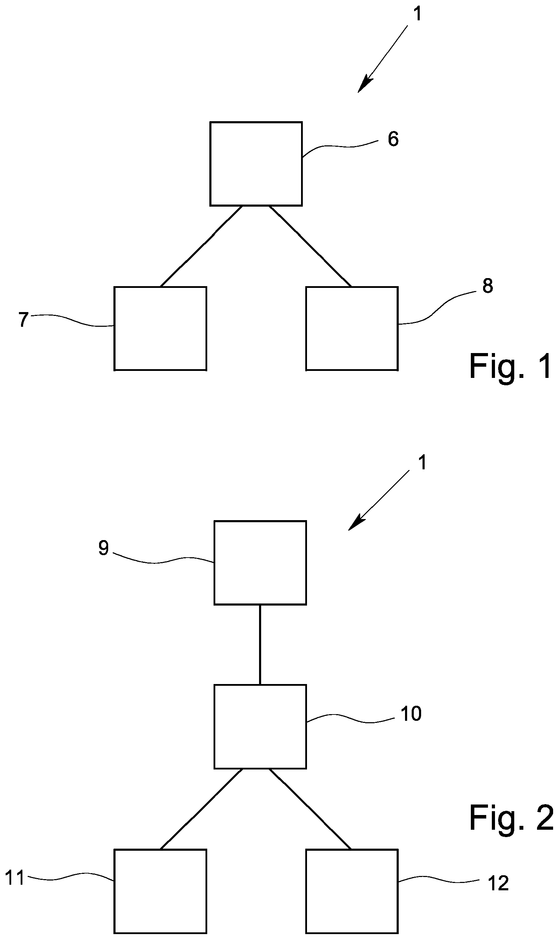

In Fig. 1 ist dargestellt ein erstes Ausführungsbeispiel eines erfindungsgemäßen Verfahrens 1 zum Betreiben eines Füllstandmessgeräts 2, wobei das Füllstandmessgerät 2 wenigstens einen Messwertaufnehmer 3 zur Aufnahme und zur Weiterleitung von Messwerten einer primären Messgröße aufweist und wobei der Messwertaufnehmer 3 einen Trigger 4 aufweist, wobei der Trigger 4 im Fall einer erfüllten Triggerbedingung die Messwertaufnahme unterbricht, wobei die Triggerbedingung im Fall einer Störung erfüllt ist.

Im dargestellten Ausführungsbeispiel weist der Trigger 4 einen physikalischen Triggereingang 5 auf, über den der Trigger 4 mit einem eine Störung verursachenden Gerät verbunden ist. Dieses Gerät sendet ein Triggersignal über den Triggereingang 5 an den Trigger 4, sobald ein die Messung störender Prozess stattfindet.

In einem ersten Schritt 6 des Verfahrens wertet der Trigger 4 aus, ob die Triggerbedingung erfüllt ist. Dies ist vorliegend dann der Fall, wenn an dem Triggereingang 5 ein Triggersignal anliegt. Ist die Triggerbedingung erfüllt, so unterbricht der Trigger in einem nächsten Schritt 7 die Messwertaufnahme und prüft anschließend erneut, ob die Triggerbedingung weiterhin erfüllt ist.

Ist die Triggerbedingung nicht erfüllt, so erfolgt in einem nächsten Schritt 8 die Messwertaufnahme und die Messwertweiterleitung.

In Fig. 2 ist dargestellt ein zweites Ausführungsbeispiel eines erfindungsgemäßen Verfahrens 1 zum Betreiben eines Füllstandmessgeräts, wobei das Füllstandmessgerät 2 wenigstens einen Messwertaufnehmer 3 zur Aufnahme und zur Weiterleitung von Messwerten einer primären Messgröße aufweist und wobei der Messwertaufnehmer 3 einen Trigger 4 aufweist, wobei der Trigger 4 im Fall einer erfüllten Triggerbedingung die Messwertaufnahme unterbricht, wobei die Triggerbedingung im Fall einer Störung erfüllt ist.

Gemäß dem dargestellten Ausführungsbeispiel ist die Triggerbedingung abhängig von den durch den Messwertaufnehmer 3 bestimmten Messwerten.

Dazu ist in dem Trigger 4 ein Grenzwert für die Messwertdifferenz zweier aufeinanderfolgender Messwerte der primären Messgröße hinterlegt. Die Triggerbedingung ist genau dann erfüllt, wenn die aktuelle Messwertdifferenz größer ist als der Grenzwert der Messwertdifferenz. Insofern liegt eine Störung vor, wenn sich die primäre Messgröße sprunghaft ändert.

In einem ersten Schritt 9 bestimmt der Messwertaufnehmer 3 wenigstens zwei Messwerte der primären Messgröße und übergibt diese an den Trigger 4. In einem anschließend Schritt 10 bestimmt der Trigger 4 die aktuelle Messwertdifferenz von jeweils zwei aufeinanderfolgenden Messwerten und vergleicht die aktuelle Messwertdifferenz bzw. die aktuellen Messwertdifferenzen mit dem hinterlegten Grenzwert. Ist wenigstens eine Messwertdifferenz größer als der hinterlegte Grenzwert, so unterbricht der Trigger in einem nächsten Schritt 11 die Messwertweiterleitung. Sind die aktuellen Messwertdifferenzen bzw. ist die aktuelle Messwertdifferenz niedriger als der hinterlegte Grenzwert, so ist die Triggerbedingung nicht erfüllt und die Messwerte werden in einem nächsten Schritt 12 weitergeleitet.

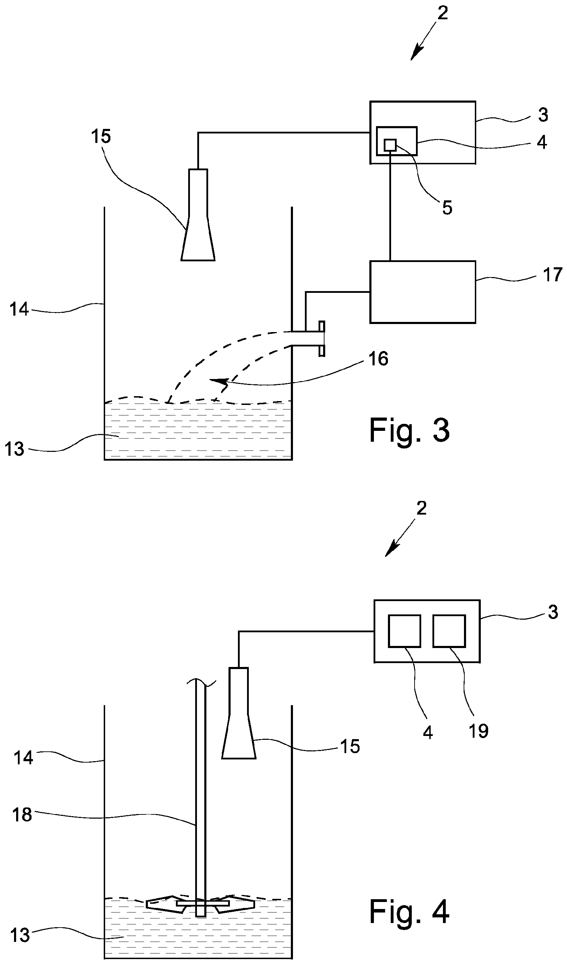

In Fig. 3 ist schematisch dargestellt ein erstes Ausführungsbeispiel eines erfindungsgemäßen Füllstandmessgeräts 2 mit einem Messwertaufnehmer 3 zur Aufnahme und zur Weiterleitung von Messwerten einer primären Messgröße, wobei der Messwertaufnehmer 3 einen Trigger 4 aufweist, wobei der Trigger 4 im Fall einer erfüllten Triggerbedingung die Messwertaufnahme unterbricht, wobei die Triggerbedingung im Fall einer Störung erfüllt ist.

Zur Messung des Füllstandes eines Mediums 13 in einem Behälter 14 weist das Füllstandmessgerät 2 eine Antenne 15 auf, die ein elektromagnetisches Signal in Richtung des Mediums 13 aussendet. Im Betrieb wird aus der Laufzeit des an dem Medium 13 reflektierten Signalanteils die Füllstandhöhe des Mediums 13 in dem Behälter 14 bestimmt.

Beim Befüllvorgang des Behälters 14 kann es nun zu der Situation kommen, dass der Einfüllstrahl 16 das elektromagnetische Signal kreuzt und insofern die Messwerte der Füllstandhöhe verfälscht. Um dieser Situation zu begegnen weist der Messwertaufnehmer 3 einen Trigger 4 mit einem Triggereingang 5 auf, über den das Füllstandmessgerät 2 mit der den Befüllvorgang steuernden Elektronikeinheit 17 verbunden ist. Im Betrieb sendet die Elektronikeinheit ein Triggersignal an den Trigger 4, wenn ein Befüllvorgang stattfindet. In Reaktion auf das Triggersignal unterbricht der Trigger 4 die Messwertaufnahme des Messgeräts. Dies hat den Vorteil, dass fehlerhafte Messwerte vermieden werden können, wodurch die Zuverlässigkeit und die Messgenauigkeit des Messgeräts verbessert werden.

In Fig. 4 ist dargestellt ein zweites Ausführungsbeispiel eines erfindungsgemäßen Füllstandmessgeräts 2 mit einem Messwertaufnehmer 3 zur Aufnahme und zur Weiterleitung von Messwerten einer primären Messgröße, wobei der Messwertaufnehmer 3 einen Trigger 4 aufweist, wobei der Trigger 4 im Fall einer erfüllten Triggerbedingung die Messwertaufnahme unterbricht, wobei die Triggerbedingung im Fall einer Störung erfüllt ist. Das Messgerät ist ebenfalls als Füllstandmessgerät 2 ausgestaltet und weist ebenso wie das in Fig. 3 dargestellte erste Ausführungsbeispiel zur Messung des Füllstandes eines Mediums 13 in einem Behälter 14 eine Antenne 15 auf, die ein elektromagnetisches Signal in Richtung des Mediums 13 aussendet.

Im Unterschied zu der in Fig. 3 dargestellten Situation ist in dem Behälter 14 zusätzlich ein Rührwerk 18 angeordnet, welches im Betrieb in regelmäßigen zeitlichen Abschnitten das Signal zur Füllstandbestimmung kreuzt und welches insofern in regelmäßigen Abständen die Füllstandmessung verfälscht.

Um dem zu begegnen, weist der Messwertaufnehmer 3 eine Zeiteinheit 19 auf, die im Betrieb dem Zustand einer Störung einen Zeitpunkt zuordnet und die von periodisch auftretenden Störungen die Periode dieser Störungen bestimmt

Im dargestellten Ausführungsbeispiel ist die Messwertaufnahme im Betrieb basierend auf der durch die Zeiteinheit 19 des Messgeräts bestimmten Periode der Störung mit der Störung synchronisiert. D.h. im Betrieb erfolgt die Messwertaufnahme nur dann, wenn keine Störung vorliegt. Die Messwertaufnahme wird automatisch mit der von der Zeiteinheit 19 bestimmten Periode unterbrochen.

Ein gemäß diesem Verfahren betriebenes Füllstandmessgerät 2 ist damit in der Lage, selbstständig Störungen zu erfassen und diese entsprechend zu berücksichtigen.

### Bezugszeichen

- 1: Verfahren zum Betreiben eines Messgeräts
- 2: Füllstandmessgerät
- 3: Messwertaufnehmer
- 4: Trigger
- 5: Triggereingang
- 6: Auswertung der Triggerbedingung
- 7: Unterbrechung der Messwertaufnahme
- 8: Messwertaufnahme und Messwertweiterleitung
- 9: Messwertaufnahme
- 10: Bestimmung der aktuellen Messwertdifferenz
- 11: Unterbrechung der Messwertweiterleitung
- 12: Messwertweiterleitung
- 13: Medium
- 14: Behälter
- 15: Antenne
- 16: Einfüllstrahl
- 17: Elektronikeinheit
- 18: Rührwerk
- 19: Zeiteinheit

## Patentansprüche

1. Verfahren (1) zum Betreiben eines Füllstandmessgeräts (2), wobei das Füllstandmessgerät (2) wenigstens einen Messwertaufnehmer (3) zur Aufnahme und zur Weiterleitung von Messwerten einer primären Messgröße aufweist, wobei die Messwertaufnahme und/oder die Messwertweiterleitung in Abhängigkeit von dem Betriebszustand des Füllstandmessgeräts (2) erfolgt, wobei die Messwertaufnahme oder die Messwertweiterleitung während einer Störung unterbrochen wird,
wobei der Messwertaufnehmer (3) einen Trigger (4) aufweist, wobei der Trigger (4) im Fall wenigstens einer erfüllten Triggerbedingung die Messwertaufnahme oder die Messwertweiterleitung unterbricht, wobei die wenigstens eine Triggerbedingung im Fall der Störung erfüllt ist,
wobei die Störung durch den Befüllvorgang eines Behälters im Rahmen der Füllstandmessung dadurch verursacht wird, dass der Einfüllstrahl den Signalstrahl zur Messung des Füllstandes kreuzt,
oder wobei die Störung eine regelmäßig wiederkehrende Störung während der Füllstandmessung ist und auf das Vorhandensein eines Rührwerks in einem Behälter zurückzuführen ist, wobei das Rührwerkspaddel den Signalstrahl kreuzt.

2. Verfahren (1) nach Anspruch 1, **dadurch gekennzeichnet, dass** die Aufnahme der Messwerte kontinuierlich oder periodisch erfolgt.

3. Verfahren (1) nach einem der Ansprüche 1 oder 2, **dadurch gekennzeichnet, dass** der Trigger (4) einen physikalischen Triggereingang (5) aufweist, wobei eine Triggerbedingung genau dann erfüllt ist, wenn dem Trigger (4) ein externes Triggersignal über den Triggereingang (5) zugeführt wird.

4. Verfahren (1) nach Anspruch 3, **dadurch gekennzeichnet, dass** das externe Triggersignal innerhalb einer Nachricht gemäß eines Datenprotokolls ausgestaltet ist, dass das Meßgerät mit einem weiteren Gerät über eine Schnittstelle verbunden ist, die eine Kommunikation auf Grundlage des Datenprotokolls ermöglicht und dass die das Triggersignal enthaltene Nachricht über die Schnittstelle an das Meßgerät bzw. an den Messwertaufnehmer übertragen wird.

5. Verfahren (1) nach einem der Ansprüche 1 bis 4, **dadurch gekennzeichnet, dass** in dem Trigger (4) wenigstens ein Grenzwert hinterlegt ist und dass eine weitere Triggerbedingung eine Vergleichsoperation mit dem Grenzwert umfasst.

6. Verfahren (1) nach Anspruch 5, **dadurch gekennzeichnet, dass** ein Grenzwert die maximale Messwertdifferenz zweier aufeinanderfolgender Messwerte der primären Messgröße ist.

7. Verfahren (1) nach einem der Ansprüche 5 oder 6, **dadurch gekennzeichnet, dass** wenigstens eine elektrische Kenngröße bestimmt wird und dass ein Grenzwert die maximale Änderung der elektrischen Kenngröße ist.

8. Verfahren (1) nach einem der Ansprüche 5 bis 7, **dadurch gekennzeichnet, dass** wenigstens eine sekundäre Messgröße bestimmt wird und dass ein Grenzwert die maximale Änderung der sekundären Messgröße ist.

9. Verfahren (1) nach einem der Ansprüche 1 bis 8, **dadurch gekennzeichnet, dass** das Messgerät (2) eine Zeiteinheit (19) zur Erfassung der Echtzeit aufweist, wobei die Zeiteinheit (19) dem Zustand einer Störung einen Zeitpunkt zuordnet und wobei die Zeiteinheit (19) im Fall von periodisch auftretenden Störungen die Periode dieser Störungen bestimmt und wobei die Messwertaufnahme oder die Messwertweiterleitung mit dieser Periode synchronisiert wird.

10. Füllstandmessgerät (2) mit wenigstens einem Messwertaufnehmer (3) zur Aufnahme und zur Weiterleitung von Messwerten einer primären Messgröße, wobei der Messwertaufnehmer (3) derart ausgestaltet ist, dass die Messwertaufnahme und/oder die Messwertweiterleitung in Abhängigkeit von dem Betriebszustand des Füllstandmessgeräts (2) erfolgt, wobei die Messwertaufnahme oder die Messwertweiterleitung während einer Störung unterbrochen ist,
wobei der Messwertaufnehmer (3) einen Trigger (4) aufweist, wobei der Trigger (4) im Fall wenigstens einer erfüllten Triggerbedingung die Messwertaufnahme oder die Messwertweiterleitung unterbricht, wobei die wenigstens eine Triggerbedingung im Fall der Störung erfüllt ist,
wobei die Störung durch den Befüllvorgang eines Behälters im Rahmen der Füllstandmessung dadurch verursacht wird, dass der Einfüllstrahl den Signalstrahl zur Messung des Füllstandes kreuzt,
oder wobei die Störung eine regelmäßig wiederkehrende Störung während der Füllstandmessung ist und auf das Vorhandensein eines Rührwerks in einem Behälter zurückzuführen ist, wobei das Rührwerkspaddel den Signalstrahl kreuzt.

11. Füllstandmessgerät (2) nach Anspruch 10, **dadurch gekennzeichnet, dass** das Füllstandmessgerät (2) eine Zeiteinheit (19) aufweist und/oder der Trigger (4) einen physikalischen Triggereingang (5) aufweist.

12. Füllstandmessgerät (2) nach einem der Ansprüche 10 oder 11, **dadurch gekennzeichnet, dass** das Füllstandmessgerät (2) im Betrieb ein Verfahren gemäß einem der Ansprüche 1 bis 9 durchführt.

## Claims

1. Method (1) for operating a fill level measuring device (2), wherein the fill level measuring device (2) has at least one measured value sensor (3) for recording and for forwarding measured values of a primary measured variable,
wherein the recording of measured values and/or the forwarding of measured values is carried out in dependence on the operating state of the fill level measuring device (2), wherein the recording of measured values or the forwarding of measured values is interrupted during a disturbance,
wherein the measured value sensor (3) has a trigger (4), wherein the trigger (4) interrupts the measured value recording or the measured value forwarding in the case of at least one fulfilled trigger condition, wherein the at least one trigger condition is fulfilled in the case of the disturbance,
wherein the disturbance is caused by the filling process of a container in the course of the fill level measurement in that the filling stream crosses the signal beam for measuring the fill level,
or wherein the disturbance is a regularly recurring disturbance during fill level measurement and is caused by the presence of an agitator in a container, wherein the agitator paddle crosses the signal beam.

2. Method (1) according to claim 1, **characterized in that** the recording of the measured values takes place continuously or periodically.

3. Method (1) according to one of claims 1 or 2, **characterized in that** the trigger (4) has a physical trigger input (5), wherein a trigger condition is fulfilled precisely when an external trigger signal is supplied to the trigger (4) via the trigger input (5).

4. Method (1) according to claim 3, **characterized in that** the external trigger signal is configured within a message according to a data protocol, that the measuring device is connected to a further device via an interface which enables communication on the basis of the data protocol, and that the message containing the trigger signal is transmitted to the measuring instrument or to the transducer via the interface.

5. Method (1) according to any one of claims 1 to 4, **characterized in that** at least one limit value is stored in the trigger (4), and that a further trigger condition comprises a comparison operation with the limit value.

6. Method (1) according to claim 5, **characterized in that** a limit value is the maximum measured value difference of two successive measured values of the primary measured variable.

7. Method (1) according to one of claims 5 or 6, **characterized in that** at least one electrical parameter is determined and that a limit value is the maximum change in the electrical parameter.

8. Method (1) according to any one of claims 5 to 7, **characterized in that** at least one secondary measured variable is determined and that a limit value is the maximum change in the secondary measured variable.

9. Method (1) according to any one of claims 1 to 8, **characterized in that** the measuring device (2) has a time unit (19) for capturing the real time, wherein the time unit (19) assigns a point in time to the state of a disturbance, and wherein the time unit (19) determines the period of these disturbances in the case of periodically occurring disturbances, and wherein the recording of measured values or the forwarding of measured values is synchronized with this period.

10. Fill level measuring device (2) with at least one measured value sensor (3) for recording and forwarding measured values of a primary measured variable,
wherein the measured value sensor (3) is designed in such a way that the measured value recording and/or the measured value forwarding takes place in dependence on the operating state of the fill level measuring device (2), wherein the measured value recording or the measured value forwarding is interrupted during a disturbance,
wherein the measured value sensor (3) has a trigger (4), wherein the trigger (4) interrupts the measured value recording or the measured value forwarding in the case of at least one fulfilled trigger condition, wherein the at least one trigger condition is fulfilled in the case of the disturbance,
wherein the disturbance is caused by the filling process of a container in the course of the fill level measurement in that the filling stream crosses the signal beam for measuring the fill level,
or wherein the disturbance is a regularly recurring disturbance during the level measurement and is caused by the presence of an agitator in a container, wherein the agitator paddle crosses the signal beam.

11. Fill level measuring device (2) according to claim 10, **characterized in that** the fill level measuring device (2) comprises a time unit (19) and/or the trigger (4) has a physical trigger input (5).

12. Fill level measuring device according to one of claims 10 or 11, **characterized in that** the fill level measuring device (2) carries out a method according to any one of claims 1 to 9 during operation.

## Revendications

1. Procédé (1) pour faire fonctionner un appareil de mesure de niveau de remplissage (2), l'appareil de mesure de niveau de remplissage (2) possédant au moins un enregistreur de valeur mesurée (3) destiné à enregistrer et à retransmettre des valeurs mesurées d'une grandeur de mesure primaire,
l'enregistrement de valeur mesurée et/ou la retransmission de valeur mesurée s'effectuant en fonction de l'état opérationnel de l'appareil de mesure de niveau de remplissage (2), l'enregistrement de valeur mesurée ou la retransmission de valeur mesurée étant interrompu pendant un dérangement,
l'enregistreur de valeur mesurée (3) possédant un déclencheur (4), le déclencheur (4) interrompant l'enregistrement de valeur mesurée ou la retransmission de valeur mesurée dans le cas d'au moins une condition de déclenchement remplie, l'au moins une condition de déclenchement étant remplie dans le cas du dérangement, le dérangement étant provoqué par l'opération de remplissage d'un récipient dans le cadre de la mesure du niveau de remplissage par le fait que le jet de remplissage croise le rayon de signal servant à la mesure du niveau de remplissage,
ou le dérangement étant un dérangement se reproduisant régulièrement pendant la mesure du niveau de remplissage et étant à attribuer à la présence d'un agitateur dans un récipient, la pale d'agitateur croisant le rayon de signal.

2. Procédé (1) selon la revendication 1, **caractérisé en ce que** l'enregistrement des valeurs mesurées s'effectue continuellement ou périodiquement.

3. Procédé (1) selon l'une des revendications 1 ou 2, **caractérisé en ce que** le déclencheur (4) possède une entrée de déclencheur (5) physique, une condition de déclenchement étant précisément remplie lorsqu'un signal de déclenchement externe est acheminé au déclencheur (4) par le biais de l'entrée de déclencheur (5) .

4. Procédé (1) selon la revendication 3, **caractérisé en ce que** le signal de déclenchement externe est configuré à l'intérieur d'un message conformément à un protocole de données, **en ce que** l'appareil de mesure est relié à un appareil supplémentaire par le biais d'une interface de données, laquelle rend possible une communication sur la base du protocole de données et **en ce que** le message contenant le signal de déclenchement est transmis à l'appareil de mesure ou à l'enregistrement de valeur mesurée par le biais de l'interface.

5. Procédé (1) selon l'une des revendications 1 à 4, **caractérisé en ce qu'**au moins une valeur limite est stockée dans le déclencheur (4) et **en ce qu'**une condition de déclenchement supplémentaire comporte une opération de comparaison avec la valeur limite.

6. Procédé (1) selon la revendication 5, **caractérisé en ce qu'**une valeur limite est la différence de valeurs mesurées maximale entre deux valeurs mesurées successives de la grandeur de mesure primaire.

7. Procédé (1) selon l'une des revendications 5 ou 6, **caractérisé en ce qu'**au moins une grandeur caractéristique électrique est déterminée et **en ce qu'**une valeur limite est la modification maximale de la grandeur caractéristique électrique.

8. Procédé (1) selon l'une des revendications 5 à 7, **caractérisé en ce qu'**au moins une grandeur de mesure secondaire est déterminée et **en ce qu'**une valeur limite est la modification maximale de la grandeur de mesure secondaire.

9. Procédé (1) selon l'une des revendications 1 à 8, **caractérisé en ce que** l'appareil de mesure (2) possède une unité de temps (19) destinée à acquérir le temps réel, l'unité de temps (19) associant un instant à l'état d'un dérangement et l'unité de temps (19), dans le cas de dérangements qui se produisent périodiquement, déterminant la période de ces dérangements et l'enregistrement de valeur mesurée ou la retransmission de valeur mesurée étant synchronisé avec cette période.

10. Appareil de mesure de niveau de remplissage (2) comprenant au moins un enregistreur de valeur mesurée (3) destiné à enregistrer et à retransmettre des valeurs mesurées d'une grandeur de mesure primaire,
l'enregistreur de valeur mesurée (3) étant configuré de telle sorte que l'enregistrement de valeur mesurée et/ou la retransmission de valeur mesurée s'effectue en fonction de l'état opérationnel de l'appareil de mesure de niveau de remplissage (2), l'enregistrement de valeur mesurée ou la retransmission de valeur mesurée étant interrompu pendant un dérangement,
l'enregistreur de valeur mesurée (3) possédant un déclencheur (4), le déclencheur (4) interrompant l'enregistrement de valeur mesurée ou la retransmission de valeur mesurée dans le cas d'au moins une condition de déclenchement remplie, l'au moins une condition de déclenchement étant remplie dans le cas du dérangement, le dérangement étant provoqué par l'opération de remplissage d'un récipient dans le cadre de la mesure du niveau de remplissage par le fait que le jet de remplissage croise le rayon de signal servant à la mesure du niveau de remplissage,
ou le dérangement étant un dérangement se reproduisant régulièrement pendant la mesure du niveau de remplissage et étant à attribuer à la présence d'un agitateur dans un récipient, la pale d'agitateur croisant le rayon de signal.

11. Appareil de mesure de niveau de remplissage (2) selon la revendication 10, **caractérisé en ce que** l'appareil de mesure de niveau de remplissage (2) possède une unité de temps (19) et/ou le déclencheur (4) possède une entrée de déclencheur (5) physique.

12. Appareil de mesure de niveau de remplissage (2) selon l'une des revendications 10 ou 11, **caractérisé en ce que** l'appareil de mesure de niveau de remplissage (2), en fonctionnement, met en œuvre un procédé selon l'une des revendications 1 à 9.
